# EUROPEAN PATENT APPLICATION

(11) **EP 3 028 583 A1**
(43) Date of publication of application: **08.06.2016**
(21) Application number: 14306823.7
(22) Date of filing: 17.11.2014
(51) Int. Cl.: A23L 29/231, A23L 21/25, A23C 9/137, A23C 9/154, A23L 29/269

(54) **Liquid milk drink enriched in B-glucan**

(71) Applicant: Etablissements J. Soufflet, 10400 Nogent Sur Seine (FR)
(72) Inventor: Devaux, Laurence Cécile Paulette Julie, 10400 NOGENT SUR SEINE (FR); Perrin, Aurore Jenifer, 10290 MARCILLY LE HAYER (FR)
(74) Representative: Blot, Philippe Robert Emile

(57) **Abstract**

The present invention relates to a liquid milk drink, comprising:
- from 0.4% to 1.5% of at least one β-glucan polymer, and
- at least 0.15% of a stabilising agent, said stabilising agent comprising xanthan gum,

by weight relative to the total weight of said drink,
provided that said drink comprises at least 0.1% by weight of xanthan gum relative to the total weight of said drink.

## Description

The present invention relates to liquid milk drinks comprising β-glucan polymers, processes for preparing such drinks and uses of such drinks.

The term "β-glucan polymer", also further called "β-glucan", refers to polysaccharide-type polymers comprising D-glucopyranosyl units linked together by (1→3) and (1→4) p-linkages. β-Glucans occur naturally in many cereal grains such as oats and barley.

β-Glucan is desirable as a food additive, for example, to impart texture ("mouth feel") to foods. β-Glucan also has the advantage of having a neutral flavour.

β-Glucan is also desirable as a therapeutic agent. β-Glucan, particularly from oats and barley grains, has been linked to a number of beneficial effects, for example the reduction of serum cholesterol levels, alongside improvements in HDL/LDL ratios in blood, an effect strongly correlated with improved cardiovascular health in humans (Bell et al., Crit. Rev. Food Sci. Nutr., Vol 39, 2, 1999). β-Glucan has also been shown to provide cardiovascular benefits, by preventing atherosclerosis and coronary heart diseases (Keogh et al., Am. J. Clin. Nutr. 2003, 78: 711-718).

According to the Food and Drug Administration (CFR, Title 21, §101.81), the daily intake of β-glucan to achieve a significant reduction of cholesterol has to be at least 3 g. The European Food Safety Authority (EFSA Journal 2009; 7(9):1254) also acknowledges a health claim for the same daily dose of β-glucan.

It is even preferable, for controlling more efficiently fluctuations of blood glucose and insulin, that the amount of β-glucan reach 5 g to 6 g per meal (Tappy et al., Diabetes Care 19, 831-834, 1996).

The use of β-glucan for foods has so far been limited mainly to solid food products, such as breakfast cereals and to certain bakery products, or to semi-fluid food products (WO 2008/101924), such as fermented milks and yoghurts, but the amounts of food products to be ingested daily have been so high, that only few persons can be persuaded to follow such diets regularly or for long periods.

There is thus a need for new food products comprising high amounts of β-glucan that are suitable for the administration of a daily intake of at least 3 g of β-glucan.

The present invention aims at providing a liquid milk drink enriched in β-glucan, conveniently comprising at least 0.75 g of β-glucan per serving. Notably, the present invention aims at providing a liquid milk drink comprising at least 1 g, preferably at least 3 g, of β-glucan per serving.

However, it is known that, over a concentration in solution of 0.5-1% by weight, β-glucan tends to form a viscous solution or a gel when dissolved in aqueous solution (WO 02/02645). For example, nectar-type drinks comprising around 1.3% of β-glucan rapidly turned to a jelly-like product only 5 min after its preparation (WO 01/26479). So far, β-glucan was thus considered by the skilled person to be unsuitable for the preparation of a drink comprising a high amount of β-glucan, typically over 0.5-1% by weight of the composition.

Another problem was further observed when one attempted to prepare a milk drink containing β-glucan. Indeed, it was observed that, at neutral pH, milk proteins and β-glucan are thermodynamically unstable and lead to phase separation (Volikakis et al. Food Research International 2004, 37, 83-94; Lazaridou et al. International Dairy Journal 2008, 18, 312-322; Sharafbafi et al. Food Hydrocolloids Volume 41, December 2014, p.274-280). Incorporation of β-glucan into milk to obtain dairy products is thus challenged by the thermodynamic incompatibility and phase separation of milk proteins and β-glucan.

It was also observed that mixtures of milk proteins with polysaccharides, such as locust bean gum, guar gum and xanthan gum, also showed phase separation (Thaiudom et al. International Dairy Journal 2003, 13, 763-771). Indeed, the incompatibility in solution of skimmed milk powder or milk protein concentrate with xanthan has already been observed (Hemar et al. Food Hydrocolloids 2001, 15, 565-574).

Thus, milk proteins are known to be incompatible with some stabilising agents, notably with xanthan gum.

Thus, the skilled person aiming at providing a milk drink comprising β-glucan is facing several technical problems, because β-glucan aqueous solution is naturally considered to turn to jelly, because β-glucan is considered to be all the more incompatible with the proteins of milk, and because milk proteins are known to be incompatible in solution with stabilising agents.

The present invention also aims at providing a liquid milk drink enriched in β-glucan, conveniently comprising at least 0.75 g, preferably at least 1 g, more preferably at least 3 g, of β-glucan per serving, which remains stable and drinkable for at least one month when kept at usual storage conditions, at 4°C as well as at 25°C.

The present invention arises from the unexpected finding by the inventors that the addition of at least a stabilising agent to a milk solution of β-glucan enables the stabilisation of said solution, even though the β-glucan is present in an amount of 0.4% or more by weight, at which said solution would usually lead to phase separation in the absence of a mixture of stabilising agents.

The present invention therefore relates to a liquid milk drink, comprising:
- from 0.4% to 1.5% of at least one β-glucan polymer, and
- at least 0.15% of a stabilising agent, said stabilising agent comprising xanthan gum,
by weight relative to the total weight of said drink,
provided that said drink comprises at least 0.1 % by weight of xanthan gum relative to the total weight of said drink.

The present invention also relates to a method for preparing a drink according to the present invention.

The present invention also relates to a beverage unit comprising an amount of drink according to the present invention such that said beverage unit comprises an amount of β-glucan polymer of at least 0.75 g, preferably at least 1 g, more preferably of at least 3 g.

The present invention also relates to a drink according to the present invention for use for the prevention of a cardiovascular disease or metabolic syndrome in a subject.

The present invention also relates to a drink according to the present invention for use for decreasing blood cholesterol concentration in a subject.

The present invention also relates to a drink according to the present invention for use for decreasing glycemic index of a food or a meal ingested by a subject.

### Detailed description of the invention

### Drinks

In the drink according to the present invention, the amount in β-glucan polymer is from 0.4 % to 1.5%, advantageously from 0.8% to 1.0%.

According to one embodiment, the amount in β-glucan polymer in the drink is over or equal to 0.4% and inferior to 0.8%, by weight relative to the total weight of said drink.

According to another embodiment, the amount in β-glucan polymer in the drink is over or equal to 0.8% and inferior or equal to 1.5%, by weight relative to the total weight of said drink.

More advantageously, the amount in β-glucan polymer in the drink is typically 0.5%, 0.6%, 0.7%, 0.8%, 0.9%, 1.0%, 1.1%, 1.2%, 1.3%, or 1.4%.

Within the framework of the present application, the term "liquid drink" relates to cold or hot drinks, optionally slightly jellified, and drinkable in a glass, a cup, a bottle, a can, a doypack, a metal box, a Tetra brick packaging, with a spoon or with a straw.

The liquid drink of the invention is not a semi-fluid food product and its viscosity is less than yoghurt for example.

Preferably, the liquid milk drink of the invention is a skimmed milk or semi-skimmed milk drink.

Within the framework of the present application, a "skimmed or semi-skimmed milk drink" is a drink based on skimmed milk or semi-skimmed milk, which may be obtained from milk or a mixture of milks, or alternatively from milk powder or a mixture of milk powders mixed with water.

Within the framework of the present application, the term « milk» designates the whitish liquid containing proteins, fats, and various vitamins and minerals that is produced by the mammary glands of mature female mammals. Milk can include that of cows, sheep, goats, buffalo, Ilama, yak or other mammal.

Preferably, the milk of the drink of the invention is cow milk.

Skimmed milk (United Kingdom and Canada), or skim milk (United States of America, Australia, and Canada), is made when all the cream (also called milkfat) is removed from whole milk. Sometimes, only about half the cream is removed, resulting in semi-skimmed milk instead. The term "about half the cream" means from 30 to 70%, preferably from 40 to 60%, for example 50%, of the cream.

Skimmed milk powder or semi-skimmed milk powder can be obtained by evaporating skimmed milk or semi-skimmed milk to dryness.

Semi-skimmed milk powder can be obtained by mixing a skimmed milk powder and a whole milk powder.

Preferably, the drink of the invention comprises milk powder in an amount from 4% to 10% by weight of the drink.

This means that the drink of the invention is obtained by dissolving milk powder into an amount of water such that a 4% to 10% concentrated solution of milk powder is obtained.

The milk powder may be skimmed milk powder or semi-skimmed powder.

Preferably, the drink of the invention is a non-fermented milk based drink.

The drinks according to the invention are highly concentrated in β-glucan and thus suitable for a daily administration of at least 0.75 g, preferably at least 1 g, more preferably at least 3 g of β-glucan polymer per serving, for example in the framework of a cholesterol-reducing diet.

The term "serving" refers to a portion of the drink that can be ingested during the same day, particularly during a 12 h period. A serving typically represents from 125 mL to 500 mL, preferably from 200 mL to 330 mL. A serving is either taken with a meal or outside meals.

The presence in the drink of a stabilising agent comprising xanthan gum enhances and extends the stability, the drinkability and the attractive aspect of said drink for a storage period of at least 21 days.

When kept in usual storage conditions, i.e. at a temperature from 4°C to 25°C, the drink is stable and remains drinkable for at least 21 days, preferably for at least one month, preferably for at least 3 months and more preferably for at least 6 months.

The term "stable" means that the drink keeps the aspect obtained just after its preparation, without any aggregation, sedimentation or phase separation, that would affect the aspect of the drink and its drinkability.

The term "aggregation" refers to the formation of particles aggregates, notably gel aggregates, visible to the naked eye, which are unpleasant for the visual aspect of the drink and its drinkability.

The term "sedimentation" refers to the gravity deposition of particles or aggregates at the bottom of the drink.

The term "phase separation" refers to the formation of two or more different phases in the drink, generally with different densities.

The term "β-glucan polymer", also further called "β-glucan", refers to polysaccharide-type polymers comprising D-glucopyranosyl units linked together by (1→3) and (1→4) p-linkages. β-Glucans occur naturally in many cereal grains such as oats and barley.

The average molecular weight of the β-glucan polymer of the composition is typically from 20 kDa to 2 000 kDa.

Preferably, the average molecular weight of the β-glucan polymer is from 50 kDa to 1 500 kDa, from 70 kDa to 1 500 kDa, from 150 kDa to 1 000 kDa, advantageously from 180 kDa to 500 kDa, from 200 kDa to 350 kDa, still advantageously from 100 kDa to 250 kDa or from 210 kDa to 280 kDa.

The average molecular weight of the β-glucan polymer is generally measured using the method of High Performance Size Exclusion Chromatography (HPSEC), with a system comprising a refractive index detector and a viscometer coupled with a multi-angles light scattering detector (Viscotek T270).

The β-glucan polymer may be obtained from cereals of the *Pooideae* subfamily. The *Pooideae* subfamily belongs to the Poaceae family and includes in particular the *Triticeae* tribe, the *Aveneae* tribe and the *Brachypodiae* tribe.

Cereals of the *Triticeae* tribe include species from the *Aegilops, Agropyron, Amblyopyrum, Australopyrum, Cockaynea, Crithopsis, Elymus, Elytrigia, Eremium, Eremopyrum, Festucopsis, Haynaldia, Henrardia, Heteranthelium, Hordelymus, Hordeum, Hystrix, Kengyilia, Leymus, Lophopyrum, Malacurus, Pascopyrum, Peridictyon, Psathyrostachys, Pseudoroegneria, Secale, Sitanion, Stenostachys, Taeniatherum, Thinopyrum, Triticosecale* and *Triticum* genus. Cereals of the *Triticeae* tribe used in the context of the invention include in particular species of the *Triticum* genus (including wheat), of the *Hordeum* genus (including barley) and of the *Triticosecale* genus (including triticale). Preferably, the cereal of the *Triticeae* tribe used in the context of the invention is selected from the group consisting of barley and triticale, and is advantageously barley.

Cereals of the *Aveneae* tribe include species from the *Agrostis, Alopecurus, Ammophila, Amphibromus, Anthoxanthum, Apera, Arrhenatherum, Avena, Beckmannia, Calamagrostis, Deschampsia, Dichelachne, Dissanthelium, Gastridium, Gaudinia, Helictotrichon, Holcus, Koeleria, Limnodea, Lophochloa, Mibora, Micropyropsis, Phalaris, Phleum, Rostraria, Sonderina, Sphenopholis, Trisetum, Vahlodea* and Veintenata genus. Cereals of the *Aveneae* tribe used in the context of the invention include in particular species of the *Avena* genus (including oats). Preferably, the cereal of the *Aveneae* tribe used in the context of the invention is oats.

Cereals of the *Brachypodie* tribe include species from the *Brachypodium* genus.

Preferably, the cereal used in the context of the invention is selected from the group consisting of oats, barley, triticale and brachypodium. More preferably, the cereal used in the context of the invention is selected from the group consisting of oats and barley.

The β-glucan polymer is typically obtained from rolled cereals or cereal flour, oats bran, rolled oats, whole oats flour, whole grain barley, dry milled barley, aqueous barley or oats extract, or purified oats or barley β-glucans.

Purified oat or barley β-glucans are commercially available.

Glucagel™, commercialised by DKSH, is obtained from barley and is a convenient source of β-glucan polymer. The average molecular weight of β-glucan polymers in Glucagel™ is from 100 kDa to 250 kDa.

Alternatively, the β-glucan polymer is directly obtained from whole grain cereals, rolled cereals or cereal flour, according to a process of extraction, such as aqueous extraction. The skilled person in the art will be able to use any type of β-glucan extraction from cereals, among those disclosed in the literature (see for example Bhatty Journal of Cereal Science 1995, 22(2), 163; US 5013561; US 5512287; Benito-Roman Journal of Supercritical Fluids 73 (2013) 120-125; and Benito-Roman Food Science and Technology 50 (2013) 57-63).

Preferably, the stabilising agent is present in the milk drink in an amount comprised from 0.15% to 1%, preferably from 0.2% to 0.8%, by weight relative to the total weight of the drink, provided that said drink comprises at least 0.1% by weight of xanthan gum relative to the total weight of said drink.

The stabilising agent is typically present in an amount of 0.4% by weight relative to the total weight of the drink, provided that said drink comprises at least 0.1% by weight of xanthan gum relative to the total weight of said drink.

When the amount in β-glucan polymer in the drink is over or equal to 0.4% and inferior to 0.8%, the amount of stabilising agent in the drink is preferably at least 0.5%, advantageously from 0.5% to 0.8% by weight relative to the total weight of the drink, provided that said drink comprises at least 0.1 % by weight of xanthan gum relative to the total weight of said drink.

When the amount in β-glucan polymer in the drink is over or equal to 0.8% and inferior or equal to 1.5%, the amount of stabilising agent in the drink is preferably of at least 0.15%, advantageously from 0.2% to 0.4%, by weight relative to the total weight of the drink, provided that said drink comprises at least 0.1% by weight of xanthan gum relative to the total weight of said drink.

The term "stabilising agent", also called "stabiliser", refers to a substance or a mixture of substances, mineral or organic, natural or artificial, which tend to inhibit the reaction between others chemicals. In the food industry, stabilising agents help to preserve the structure of food products. Stabilising agents are generally used in aqueous solutions to control the texture and sensory qualities of said solutions as well as extending their shelf life, by preventing aggregation, sedimentation or phase separation phenomenon.

According to one embodiment, the stabilising agent comprises xanthan gum and a hydrocolloid other than xanthan gum.

The term "hydrocolloid" refers to a colloid system wherein the colloid particles are hydrophilic polymers dispersed in water. A hydrocolloid has colloid particles spread throughout water and can take place in different states, for example a gel or a jellified solid. In the food industry, hydrocolloids are typically used to influence the texture or viscosity of aqueous preparations, generally by converting liquid preparations into gel or even solid preparations.

The hydrocolloid is preferably selected from the group consisting of arabic gum, pectins, and mixtures thereof.

According to this embodiment, the drink comprises at least 0.1% of xanthan gum and at least 0.1% of a hydrocolloid other than xanthan gum, by weight relative to the total weight of the drink.

For example, the drink comprises at least 0.1 % of xanthan gum and at least 0.1 % of arabic gum, by weight relative to the total weight of the drink.

For example, the drink comprises at least 0.1 % of xanthan gum and at least 0.1 % of pectin, by weight relative to the total weight of the drink.

Preferably, the drink comprising 0.1 % of arabic gum, 0.1 % of xanthan gum and 0.2% of pectin, by weight relative to the total weight of the drink.

Thixogum S™, commercialised by Nexira is a blend of highly purified xanthan gum and arabic gum (1:1) and is suitable to stabilize the drink according to the invention.

Grindsted Pectin RS 461, commercialised by Danisco, is a commercially available purified pectin and is also suitable to stabilize the drink according to the invention, particularly in association with xanthan gum and/or arabic gum.

Surprisingly, the inventors have found that the addition of a stabilising agent according to this embodiment enables the stabilisation of a milk drink comprising β-glucan, even in an amount over 0.4%, and prevents that it turned into a non-pourable jelly-like mixture for a period of time of at least one month. The stabilising agent also prevents sedimentation of particles, formation of unpleasant aggregates and the phase separation usually obtained when β-glucan is mixed with milk proteins.

According to another embodiment, the stabilising agent consists in xanthan gum.

According to this embodiment, the drink comprises at least 0.15% of xanthan gum, by weight relative to the total weight of the drink.

Surprisingly, the inventors have found that the addition of at least 0.15% of xanthan gum enables the stabilisation of a milk drink comprising β-glucan, even in an amount over 0.4%, and prevents that it turned into a non-pourable jelly-like mixture for a period of time of at least one month. The stabilising agent also prevents sedimentation of particles, formation of unpleasant aggregates and the phase separation usually obtained when β-glucan is mixed with milk proteins.

The drink according to the invention is stable for at least 21 days, preferably for at least one month, preferably for at least 3 months and more preferably for at least 6 months, in usual storage conditions, i.e. at a temperature comprised from 4°C to 25°C, without thickening or jellifying the composition and without causing phase separation at a point that it would no longer be easily drinkable.

The drink according to the present invention is typically meant to reduce and/or control the cholesterol level and to reduce and/or control the glycemic index.

Accordingly, it is preferred that the drink according to the present invention contains less than 11%, preferably less than 7%, advantageously less than 5%, less than 1% and more advantageously less than 0.5% of starch by weight of the drink.

Most preferably, the drink according to the present invention contains no starch.

Preferably, the drink of the present invention is a reduced-calorie, light or even low-calorie food product.

Accordingly, the drink of the present invention preferably contains from 0% to 14% of sugars by weight of the drink, more preferably less than 10%, advantageously less than 5%, more advantageously less than 2%.

In the framework of the present application, the term "sugars" refers to monosaccharides, such as glucose, fructose and galactose, and to disaccharides, such as sucrose and, and to any saccharide-type compound that provides a significant caloric content in typical usage amounts, except lactose.

Preferably, the drink according to the invention further comprises a flavouring agent, or a mixture of flavouring agents, preferably used in the drink in any suitable amount or concentration effective to achieve the level of taste desired.

The flavouring agent is preferably present in an amount from 0% to 3% by weight of the drink, more preferably less than 2%, advantageously less than 1%.

Flavouring agents include fruit flavours, plant flavours, spice flavours, flower flavours, among others.

As used herein, the term "fruit flavour" refers to any fruit fraction, fruit component (e.g., rind, zest, pith, pericarp, pulp, leaf, stem, seed, and the like), from the named fruit (FTNF) flavour (e.g., a combination of fruit essence, fruit oil and/or fruit flavour, such as, e.g., an orange from the named fruit flavour), fruit extract (e.g., expressed, absorbed, macerated, distilled and the like), fruit oil (e.g., essential oil, folded essential oil), fruit essence, fruit puree, fruit aroma and the like that can be added to a food product to enhance flavour (e.g., to provide and/or enhance one or more high note flavours).

In certain exemplary embodiments, one or more citrus fruit flavours are used. The citrus flavour may include one or more of an orange fraction, an orange component, an orange extract, an orange essential oil, an orange folded essential oil, an orange aroma, and an orange essence. The citrus flavour may also include one or more of a fraction, component, extract, essential oil, folded essential oil, aroma, or essence of grapefruit, lemon, lime, or tangerine, among others. The citrus flavour may also include chemical compounds extracted from natural sources or synthetically produced e.g., limonene, octanol and its derivatives, acetaldehyde, α-pinene, β-pinene, sabinene, myrcene, octanal, linalool, carene, decanal, citral, sinensal, among others.

As used here, the term "plant flavour" refers to flavours derived from parts of a plant other than the fruit. As such, plant flavours can include those flavours derived from essential oils and extracts of nuts, bark, roots and leaves. Examples of such flavours include cola flavours, tea flavours, spice flavours and the like, and mixtures thereof. Non-limiting examples of spice flavours include anise, cassia, clove, cinnamon, pepper, ginger, vanilla, cardamom, coriander, root beer, sassafras, ginseng, and others. Flavouring agents can be in the form of an extract, oleoresin, juice concentrate, bottler's base, or other forms known in the art.

As used herein, the term "flower flavour" refers to any flower fraction (e.g., petals) or flower extract (macerated or expressed).

Preferred flavouring agents are for example selected from the group consisting of fruit, vegetable or plant aromas, and may be, but are not limited to, lemon, lime, orange, pear, peach, apricot, mango, pineapple, banana, grapefruit, strawberry, raspberry, blackcurrant, cherry, passion fruit, water melon, papaya, cranberry, currant, apple, vanilla, chocolate, coffee, coconut, cocoa, cappuccino, nut, caramel (toffee), mint, tomato, cucumber, carrot, or mixture thereof.

Preferably, the drink according to the invention further comprises a fruit or vegetable juice concentrates, preferably used in the drink in any suitable amount or concentration effective to achieve the level of taste desired.

The fruit or vegetable juice concentrate is preferably present in an amount from 0% to 30% by weight of the drink, more preferably from 0 to 20%, advantageously from 0% to 15%, more advantageously from 1% to 10%, said juice concentrates being preferably selected from the group consisting of fruit or vegetable concentrates.

Preferably, the drink according to the invention further comprises an aqueous flower extract, suitable for food product, obtained by maceration of infusion or fresh or dry flowers into water. Conveniently, said aqueous flower extract, such as hibiscus extract, is used to prepare the drink of the invention.

In certain embodiment, the drink may include a vegetable component, including, e.g, but not limited to, one or more vegetable juices, extracts, powders, skins, rinds, grinds, roots, pulps, homogenised pulps, purees or any combination thereof. The vegetable component can be used in the drink in any suitable amount or concentration effective to achieve the level of taste or texture desired.

Preferably, the drink according to the invention further comprises at least one sweetener, preferably present in an amount or concentration effective to achieve the level of sweetness desired.

The term "sweetener", also called "sugar substitute", is a food additive, natural or synthetic, that duplicates the effect of sugar in taste, usually with less food energy. The sensation of sweetness caused by these compounds is calibrated on the sweetness of sugar (also called sucrose). Techniques to determine such sweetness are well-known from the skilled person. The sweetness of a sweetener is for example determined according to the following procedure.

Samples of water that have been artificially sweetened to varying degrees are presented to tasters of a taste panel. First, the tasters are given plain water, and then, they drink samples with higher and higher concentrations until they start to taste something different (not necessarily sweet). When half the test population can detect a change in the water, the "threshold value" for the sweetener is reached. The relative sweetness is then measured by comparing the threshold value of the sweetener with the one of sugar.

Preferably, the sweetener is at least 30 times as sweet as sugar.

Preferably, the sweetener is a natural or artificial non-nutritive sweetener, i.e. a sweetener which does not provide significant caloric content in typical usage amounts.

The sweetener is preferably present in an amount from 0% to 0.05% by weight of the drink.

The sweetener is preferably selected from the group consisting of rebaudioside A, steviol glycosides, *Stevia rebaudiana* extract, Lo Han Guo, mogroside V, monatine, glycyrrhizin, thaumatin, monellin, brazzein, cyclamate, acesulfame K, sucralose, aspartame, saccharine, neohesperidin dihydrochalcone, neotame, or mixture thereof.

More preferably, the sweetener is preferably selected from the group consisting of steviol glycosides and *Stevia rebaudiana* extract.

In certain embodiment, a combination of one or more sweeteners is used to provide the sweetness and other aspects of desired taste profile and nutritive characteristics.

The drink according to the invention may further comprise at least one ingredient selected from the group consisting of a taste modifier, a vitamin, a mineral, a buffering agent, a colorant and a preservative.

Taste modifiers may provide their own characteristic flavour, or may have little or no flavour impact by themselves. Taste modifiers have any one or more of the properties of reducing, masking, or eliminating undesirable taste characteristics, or enhancing desirable taste characteristics, for example, by controlling one or more of sweetness, sourness, bitterness, saltiness, mouthfeel, or taste temporal effects. Non-limiting examples of undesirable taste characteristics reduced by taste modifiers include one or more of bitter aftertaste, metallic aftertaste, astringency, thin mouthfeel, harshness, delayed sweetness onset, lingering sweetness, excess sourness, and other off-notes. Non-limiting examples of desirable taste characteristics enhanced by taste modifiers include one or more of sweetness intensity or impact, fullness or body, and smoothness, among others. Non-limiting examples of taste modifiers include propylene glycol, glycerol, and commercially available products (e.g., Symrise™ Natural Flavor, Sweetness Enhancer Type SWL 196650, Firmenich Natural Flavor (Modulasense™ Type) 560249 T, and Firmenich™ Natural Flavor (Modularome™ Type) 539612 T, among others). It will be within the ability of those skilled in the art, given the benefit of this disclosure, to select suitable additional or alternative taste modifiers for use in various embodiments of the composition disclosed here.

Certain embodiments of the drink disclosed here may contain one or more added vitamins, e.g., added Vitamin A (including Vitamin A precursors such as beta carotene), Vitamin B₁ (i.e., thiamine), Vitamin B₂ (i.e., riboflavin), Vitamin B₃ (i.e., niacin), Vitamin B₆, Vitamin B₇ (i.e., biotin), Vitamin B₉ (i.e., folic acid), Vitamin B₁₂ (i.e., cobalamin), Vitamin D, and Vitamin E (i.e., tocopherols and tocotrienols), and Vitamin K, and combinations thereof.

It is preferred that the drink according to the present invention contains no Vitamin C (i.e. ascorbic acid).

Certain embodiments of the drink disclosed here may contain one or more added minerals, e.g., added calcium, potassium, magnesium, phosphorous, zinc, and iron, among others.

Certain embodiments of the drink disclosed here also may contain small amounts of buffering agents to adjust pH. Such pH adjusters include, e.g., the sodium and potassium salts of citric, tartaric, and lactic acids. The amount included will depend, of course, on the type of buffering agents and on the degree to which the pH is to be adjusted.

Colorant, or color additive, may be any dye, pigment or substance that imparts color when it is added to food or drink. Colorants may be in forms consisting of liquids, powders, gels and pastes. The skilled person is able to select among additives E100-E199 the food colorant or mixture of food colorants suitable to obtain the desired color.

Common food colorants include for example caramel coloring (E150), annatto (E160b), chlorophyllin (E140), cochineal (E120), betanin (E162), turmeric (curcuminoids, E100), saffron (carotenoids, E160a), paprika (E160c), lycopene (E160d), elderberry juice, pandan and butterfly pea.

Preservative is a naturally occurring or synthetically produced substance that is added to products such as foods to prevent decomposition by microbial growth (bacteria or fungi, including mold) or by undesirable chemical changes.

The skilled person is able to select among additives E200-E299 the food preservative or mixture of food preservatives suitable to obtain the desired effect.

Common antimicrobial preservatives include for example sorbic acid and its salts, benzoic acid and its salts, calcium propionate, sodium nitrite, sulfites (sulfur dioxide, sodium bisulfite, potassium hydrogen sulfite, etc.) and disodium EDTA (EthyleneDiamineTetraacetic Acid). Antioxidant food preservatives include BHA (Butylated HydroxyAnisole), BHT (Butylated HydroxyToluene), TBHQ (Tertiary ButylHydroQuinone) and propyl gallate. Preservatives also include natural antioxidants. Natural antioxidants include for example plants extract, such as rosemary extract.

Certain embodiments of the drink disclosed here may contain a milk preservative able to prevent decomposition of the milk by microbial growth.

The drink according to the invention typically has a viscosity comprised from 5 mPa.s to 150 mPa.s at a temperature of 10°C.

Preferably, the drink has a viscosity comprised from 10 mPa.s to 100 mPa.s at 10°C.

The drink according to this embodiment remains easily drinkable, because of its low viscosity, for at least 21 days, preferably for at least one month, preferably for at least 3 months and more preferably for at least 6 months when stored at a temperature from 4°C to 25°C.

Generally, it is more difficult for a composition with low viscosity to remain stable. Indeed, phase separation and sedimentation are easily obtained in compositions with low viscosity. However, it has been observed that the drinks according this embodiment remain stable, and show no formation of aggregates, phase separation or sedimentation, for at least 21 days, preferably one month, preferably 3 months and preferably for at least 6 months when stored at a temperature from 4°C to 25°C.

These ranges of viscosity are suitable for convenient drinkability of the drink of the invention, at a temperature from 4°C to 80°C.

Viscosity is defined as the tangential force per unit area required to move one horizontal plane with respect to the other at unit velocity when maintained a unit distance apart by the fluid.

The viscosity is typically measured according to a method well-known by the skilled person, using a vibro-viscometer (AnD SV-10) equipped with vibrating blades immerged in the sample under analysis, the temperature being controlled by a thermostatic bath. The resistance of the sample to the oscillating blades is correlated to the sample viscosity. Thus, by measuring said resistance, the viscosity of the sample is determined, according to the thermostatic temperature.

The drink according to the invention is preferably consumable at a temperature comprised between 4°C and 80°C.

More preferably, the drink according to the invention is consumable between 4°C and 25°C, and preferably between 4°C and 10°C.

Even at these relatively cold temperatures, the viscosity of the drink does not prevent its drinkability.

The dry matter of the composition according to the invention is typically comprised between 5% and 30%.

The pH of the composition according to the invention is typically comprised between 6.0 and 7.5, preferably between 6.4 and 7.2.

Preferably, the composition according to the invention further comprises an oil, preferably a vegetable or animal oil.

Said oil is preferably present in an amount from 0% to 2%, advantageously in an amount of 1 % by weight of the composition.

Said oil is preferably selected from the group consisting of fish oil rich in omega-3, arachid oil, avocado oil, safflower oil, colza oil, olive oil, sunflower oil, grapeseed oil, sesame oil, soybean oil, corn germ oil, wheat germ oil, flax oil and nut oil.

According to one embodiment, the composition according to the invention is in the form of an oil-in-water emulsion.

The oil phase typically consists in a flavouring agent such as an essential oil or a vegetable oil.

The oil phase preferably represents from 0 to 10% in weight of the composition, preferably from 0 to 5%, advantageously from 0 to 1%.

### Methods of preparation

The present invention also relates to a method for preparing a drink as defined in the section "Drinks" above, said method comprising the following steps:
- a step of preparing a suspension comprising a β-glucan polymer, a stabilising agent comprising xanthan gum, and milk, the amount of β-glucan polymer in said suspension being comprised from 0.4% to 1.5% by weight relative to the total weight of said suspension,
- a step of mechanically stirring said suspension at a temperature comprised from 20°C to 90°C, preferably from 70°C to 90°C, until obtaining a homogeneous milk drink,
- a step wherein the milk drink is let to rest for a storage period at a temperature comprised from 4°C to 25°C, and
- a step of mechanically stirring the drink again after said storage period.

The stabilising agent is as described in the section "Drinks" above.

According to a first variant, the drink of the invention is prepared from milk powder, such as skimmed milk powder or semi-skimmed milk powder.

According to this variant, the suspension is preferably obtained by adding the β-glucan polymer, the stabilising agent, and a milk powder, either simultaneously, separately or sequentially, to a predetermined amount of water, said water being advantageously preheated at a temperature comprised from 20°C to 90°C, preferably from 70°C to 90°C.

According to second variant, the drink of the invention is prepared from milk, such as skimmed milk or semi-skimmed milk.

According to this variant, the suspension is preferably obtained by adding the β-glucan polymer and the stabilising agent, either simultaneously, separately or sequentially, to a predetermined amount of milk, said milk being advantageously preheated at a temperature comprised from 20°C to 90°C, preferably from 70°C to 90°C.

In the first variant and the second variant of the method of the invention, the inventors have surprisingly found that the combination of the addition of a stabilising agent comprising xanthan gum in the drink and the execution of the second stirring step described above, is essential to obtain a drink which remains stable and drinkable for at least 21 days, preferably for at least one month, more preferably for at least 3 months, and advantageously for at least 6 months, at a temperature comprised from 4°C and 25°C.

Indeed, it was observed that without said second step, the drink was not stable for more than 3 days when stored at 25°C and for more than 21 days when stored at 4°C.

It was also observed that without the stabilising agent, or with a stabilising agent not in conformity with the definition given above, the drink was not stable for more than 1 day when stored at 25°C or at 4°C.

β-glucan polymer is often commercially available in the form of a purified extract from cereals such as oats or barley, highly concentrated in β-glucan polymer.

Said purified extract preferably contains at least 50% by weight of β-glucan polymer, advantageously at least 70%, typically around 75%, the remaining generally consisting in starch, proteins, fibres and lipids contained in the cereals.

Glucagel™ (commercialised by DKSH) is an example of purified extract suitable for the method of the invention. Glucagel™ comprises 75% of β-glucan polymer, 5% of fibres other than β-glucan, 4% of proteins, 3% of starch and 1.5% of lipids.

The "predetermined amount of water" mentioned above in the first variant is the amount of water suitable to obtain a drink having the desired concentration of milk powder and/ or of β-glucan polymer.

Said predetermined amount of water is for example preheated to 80°C.

The "predetermined amount of milk" mentioned above in the second variant is the amount of milk suitable to obtain a drink having the desired concentration of β-glucan polymer.

Said predetermined amount of milk is for example skimmed milk or semi-skimmed milk.

Said predetermined amount of milk is for example typically preheated to 80°C.

In the first and the second variant, during the first stirring step, the suspension is preferably stirred at a temperature and for a period of time suitable to obtain a homogeneous drink, which does not contain any particle of β-glucan or milk powder in suspension in the drink.

Typically, during the first stirring step, the suspension is stirred at a temperature of about 80°C for 1 min to 1 hour, preferably for 1 min to 30 min, more preferably for 1 min to 15 min, for example for 1 min to 3 min.

The step of mechanically stirring is for example carried out with a mixing device, preferably a high-speed disperser (above 2000 rpm), such as a rotor-stator mixer (such as an Ultra-turrax, a VMI or a Silverson mixer) or a deflocculation mixer (such as a VMI), or any apparatus suitable to homogenize the suspension.

The stirring speed is preferably comprised between 100 rpm and 16 000 rpm, preferably from 1 000 rpm to 16 000 rpm.

The storage period, which is after the first stirring step and before the second stirring step, is preferably comprised from 1 hour to 72 hours, preferably from 1 hour to 48 hours, and is for example about 24 hours.

Preferably, the drink is kept in an aseptic tank during said storage period.

In the first and the second variant, during the second stirring step, the drink is preferably stirred at a temperature and for a period of time suitable to obtain a homogeneous and stable drink, which does not contain any aggregate in the drink.

Typically, during the second stirring step, the drink is stirred at the same temperature as the temperature of the storage step.

Typically, during the second stirring step, the drink is stirred for 1 second to 15 seconds, for example for 6 seconds.

Typically, during the second stirring step, the drink is stirred upside-down several times, for example about 100 times/minute.

When kept at a temperature comprised from 4°C to 25°C, the drink obtained according to the above method (either according to the first or the second variant) remains stable for at least 21 days, preferably for at least one month, more preferably for at least 3 months, and advantageously for at least 6 months.

Preferably, the method of the invention further comprises a thermal treatment of the drink.

Such thermal treatment aims at preventing the microbial growth of bacteria present in milk during the storage of the drink and thus extends the shelf life of the drink, which can be stored at a temperature comprised from 4°C to 25°C for at least 21 days, preferably for at least one month, more preferably for at least 3 months. This step also avoids the addition of a preservative into the drink.

According to one embodiment, the thermal treatment is carried out after the first stirring step.

According to one embodiment, the thermal treatment is carried out after the second stirring step.

According to one embodiment, the thermal treatment is carried out after the first stirring step and after the second stirring step.

Depending on the temperature of the drink during the storage period, the skilled person will advantageously carry out the thermal treatment before or after said storage period.

For example, if the drink is treated thermally after the first stirring step, the drink may be kept at any temperature from 4°C to 25°C during the storage period, preferably in an aseptic tank.

If the drink is not treated after the first stirring step, but only after the second stirring step, the drink is preferably let to rest for the storage period at a temperature of 4°C, preventing the bacterial growth.

According to one embodiment, the drink is treated by any type of pasteurization suitable for the treatment of milk.

According to one embodiment, the drink is treated by pasteurization before its conditioning, for example by high-temperature short-time pasteurization (HTST, also known as "flash"). Preferably, the drink is treated by pasteurization before it is let to rest. Accordingly, the drink is preferably let to rest in an aseptic tank.

According to one embodiment, the drink is treated by sterilization before its conditioning, for example by ultra-high temperature pasteurization (UHT, also known as ultra-heat-treating). Preferably, the drink is treated by sterilization before it is let to rest. Accordingly, the drink is preferably let to rest in an aseptic tank.

Alternatively, the drink can be treated by thermal treatment, such as pasteurisation or sterilization, after its conditioning.

According to one embodiment, other ingredients, such as flavouring agents, fruit or vegetable juices concentrates, and the above-mentioned additives, such as preservatives, may be added to the drink before its conditioning.

The drink may be conditioned in a conditioning unit before or after the second stirring step.

The term "conditioning unit" refers to a bottle, a can, a doypack, a metal box, a Tetra brick packaging, or to any conditioning unit suitable for milk conservation.

Preferably, the drink is conditioned after the second stirring step.

The present invention also relates to a drink obtainable by the method of preparation according to the present invention.

### Beverage unit

The beverage unit according to the invention preferably enables the administration of at least 0.75 g, preferably at least 1 g, more preferably at least 3 g of β-glucan polymer during the same day, particularly during a 12 h period.

Advantageously, the beverage unit is a beverage of 125 mL to 500 mL, preferably of 200 mL to 330 mL.

Advantageously, the beverage unit is a beverage of 8 oz to 12 oz.

According to one embodiment, the beverage unit is a beverage of 330 mL.

For example, a beverage unit of 330 mL of a drink according to the invention comprising 1.0% by weight of β-glucan enables the administration of 3.3 g of β-glucan, and is easily drinkable, even in the framework of a daily diet.

According to another embodiment, the beverage unit is a beverage of 200 mL.

For example, a beverage unit of 200 mL of a drink according to the invention comprising 1.5% by weight of β-glucan enables the administration of 3.0 g of β-glucan, and is easily drinkable, even in the framework of a daily diet.

For example, a beverage unit of 125 mL of a drink according to the invention comprising 0.8% by weight of β-glucan enables the administration of 1.0 g of β-glucan.

### Methods of prevention of diseases

As known from the skilled person, β-glucan polymers, when used at sufficient levels, have beneficial effects in the reduction of the cholesterol level and of the glycemic index, thereby decreasing the risk of onset of cardiovascular diseases and of the metabolic syndrome.

The present invention therefore relates to a drink, as defined above, for use for the prevention of a cardiovascular disease in a subject.

The present invention also concerns the use of a drink, as defined above, for the manufacture of a functional food intended to the prevention of a cardiovascular disease.

The present invention also concerns a method for preventing a cardiovascular disease in a subject, comprising administering to a subject in need thereof a prophylactically effective amount of a drink, as defined above.

In the context of the invention, the term "cardiovascular disease" refers to a disease that involves the heart or blood vessels (arteries and veins). More particularly, a cardiovascular disease according to the invention denotes a disease, lesion or symptom associated with an atherogenesis process that affects the cardiovascular system. It includes especially the conditions in which an atheroma plaque develops as well as the complications due to the formation of an atheroma plaque (stenosis, ischemia) and/or due to its evolution toward an acute ischemic stroke (thrombosis, embolism, infarction, arterial rupture).

Cardiovascular diseases include coronary artery disease, coronary heart disease, hypertension, atherosclerosis, in particular iliac or femoral atherosclerosis, angina pectoris, thrombosis, heart failure, stroke, vascular aneurysm, vascular calcification, myocardial infarction, vascular stenosis and infarction, and vascular dementia. Preferably, the cardiovascular disease according to the invention is selected from the group consisting in coronary artery disease, hypertension, atherosclerosis, vascular aneurysm, vascular calcification, vascular dementia and heart failure.

The present invention is also drawn to a drink, as defined above, for use for the prevention of a metabolic syndrome in a subject.

The present invention also concerns the use of a drink, as defined above, for the manufacture of functional food intended for the prevention of a metabolic syndrome.

The present invention also relates to a method for preventing a metabolic syndrome in a subject, comprising administering to a subject in need thereof a prophylactically effective amount of a drink, as defined above.

In the context of the invention, the term "metabolic syndrome" refers to a multiplex risk factor for cardiovascular disease comprising the 6 following components: abdominal obesity, atherogenic dyslipidemia, raised blood pressure, insulin resistance with or without glucose intolerance, proinflammatory state and prothrombotic state. The metabolic syndrome is more specifically defined in Grundy et al. (2004) Circulation 109:433-438.

As used herein, the term "functional food" refers to a natural or processed food that contains known biologically-active compounds which when in defined quantitative and qualitative amounts provides a clinically proven and documented health benefit.

As used herein, the term "preventing" or "prevention" means decreasing or cancelling the risk of appearance of the disease concerned.

Drinks of the invention will be administered to a subject in an amount sufficient to delay, reduce, or prevent the onset of clinical or subclinical disease. An amount adequate to accomplish this purpose is defined as a "prophylactically effective amount". Determination of an appropriate dosage amount and regimen can readily be determined by those skilled in the art. Amounts effective for this use may depend on the severity of the disease or condition and the weight and general state of the patient, but are typically of at least 3 g of β-glucan polymer per day per subject. The total effective amount of β-glucan polymers present in the drinks of the invention can be administered to a mammal as a single dose, or can be administered using a fractionated treatment protocol, in which multiple doses are administered over a more prolonged period of time.

The prophylactically effective amount of the drinks of the invention and used in the methods of this invention applied to mammals (*e.g.,* humans) can be determined by those of skill in the art with consideration of individual differences in age, weight and the condition of the mammal. The agents of the invention are administered to a subject (*e.g.* a mammal, such as human, mouse, livestock (*e.g.,* cattle, sheep, or pigs), domestic pet (*e.g.,* cat or dog)) in an effective amount, which is an amount that produces a desirable result in a treated subject. Such prophylactically effective amounts can be determined empirically by those of skill in the art.

The drinks of the invention are preferably used for maintaining a normal blood cholesterol concentration in a subject.

As used herein, the term "maintaining" means preventing significant variations in a level of interest around a given value.

As used herein, the term "normal blood cholesterol concentration" refers to the range of blood cholesterol concentrations or the mean blood cholesterol concentrations measured in a healthy subject. Typically, a normal blood cholesterol concentration is below 200 mg/dL or 5.2 mmol/L.

The drinks of the invention are also preferably used for reducing the blood cholesterol concentration in a subject.

The drinks of the invention are also preferably used for decreasing and/or controlling glycemic index of a food or a meal ingested by a subject.

As used herein, the term "glycemic index" or "GI" refers to a classification criterion of food comprising carbohydrates, based on their effects on glycemia during the two hours following their ingestion. The glycemic index of a food is given relative to a reference food to which the index 100 is given (typically glucose or white bread).

The drinks of the invention are particularly useful for decreasing and/or controlling glycemic index during a meal, in particular when administered, preferably ingested, simultaneously with the meal.

In the context of the invention, a "subject" denotes a human or non-human mammal, such as a rodent (rat, mouse, rabbit), a primate (chimpanzee), a feline (cat), or a canine (dog). Preferably, the subject is human. The subject according to the invention may be in particular a male or a female. The subject according to the invention is preferably an adult.

In a particular embodiment, the subject to be treated has a normal or mildly elevated blood cholesterol concentration.

In another particular embodiment, the subject to be treated is obese.

As used herein, the term "obesity" or "obese" refers to a medical condition in which excess body fat has accumulated to the extent that it may have an adverse effect on health, leading to reduced life expectancy and/or increased health problems. Obesity is typically determined by assessing the body mass index (BMI), a measurement which compares weight and height. In particular, people are defined as overweight if their BMI is between 25 kg/m² and 30 kg/m², and obese when it is greater than 30 kg/m².

The drinks of the invention are preferably administered by the oral route. They are typically ingested (drinked), preferably before or during a meal.

### Examples

### Example 1 - Preparation of milk drinks

### Ingredients

- Skimmed milk powder (cow milk), commercialised by Euroserum,
- Whole milk powder (cow milk), commercialised by Armor Protéines,
- Glucagel™, commercialised by DKSH,
- Thixogum S™ (gum arabic/gum xanthan 1:1), commercialised by Nexira,
- Grindsted® Pectin RS 461, commercialised by Danisco,
- Grindsted® Xanthan 80, commercialised by Danisco,
- Fibregum™ (Arabic gum), commercialised by Nexira,
- Viscogum™ (Guar gum), commercialised by Cargill,
- Grindsted® CG BEV150 (Carboxymethylcellulose), commercialised by Danisco,
- Grindsted® LBG 246 (Locust bean gum), commercialised by Danisco,
- Sugar, commercialised by Intermarché, and
- Stevia 98% Reb A, commercialised by Firmalis.

Sodium azide (0.02% w/w) was used as preservative for the test drinks in order to prevent microbial growth.

### Preparation of test drinks

Test drinks comprising β-glucan were prepared using commercially available Glucagel™ as source of β-glucan. Glucagel™ comprises, by weight:
- 75% of β-glucan polymer,
- 5% of fibres other than β-glucan,
- 4% of proteins,
- 3% of starch, and
- 1.5% of lipids.

When milk powder was used, the method of preparation of the test drinks was as follows.

Glucagel™ was mixed together with the milk powder, the stabilising agent(s) and the optional ingredients (sugar and/or Stevia), in order to obtain a mixture of powders. This mixture was then added to a predetermined amount of water preheated to 80°C to obtain a suspension. The amount of water was calculated according to the concentration in β-glucan polymer desired in the final test drink. The resulting suspension was then mechanically stirred for 1 to 3 min while being maintained at 80°C, in order to obtain a dairy solution of β-glucan polymer.

When milk was used, the method of preparation of the test drinks was as follows.

Glucagel™ was mixed together with the stabilising agent(s) and the optional ingredients (sugar and/or Stevia), in order to obtain a mixture of powders. This mixture was then added to a predetermined amount of milk preheated to 80°C to obtain a suspension. The amount of milk was calculated according to the concentration in β-glucan polymer desired in the final test drink. The resulting suspension was then mechanically stirred for 1 to 3 min while being maintained at 80°C, in order to obtain a dairy solution of β-glucan polymer.

At the end of the stirring, the resulting solutions were conditioned in bottles, before they have cooled down, and were let to rest at a storage temperature of 4°C or 25°C. After a storage period (from 12 hours to 72 hours), bottles were stirred upside down for 6 seconds (10 reversals) and let again to rest at 4°C or 25°C.

The stability period of the different test drinks was then measured and presented in the **Table 1** below. The stability period of a test composition is the period during which said test drink remains stable, without formation of aggregates, sedimentation or phase separation phenomenon, and without any change of aspect that would affect its drinkability.

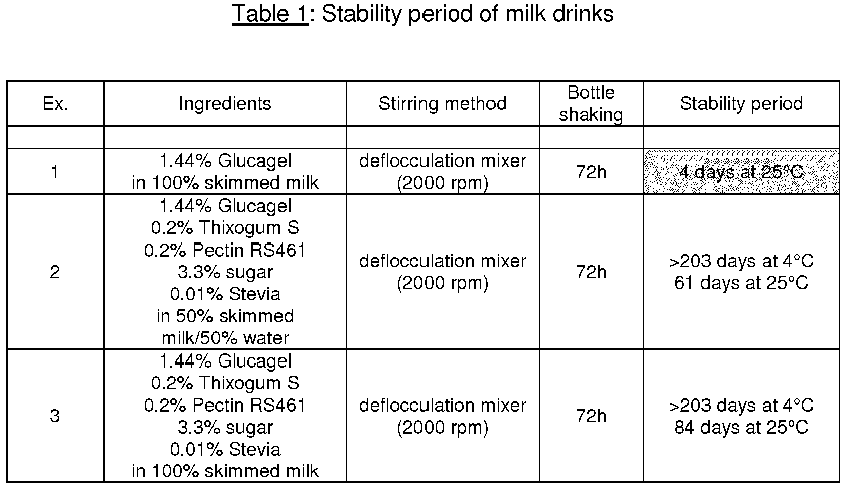

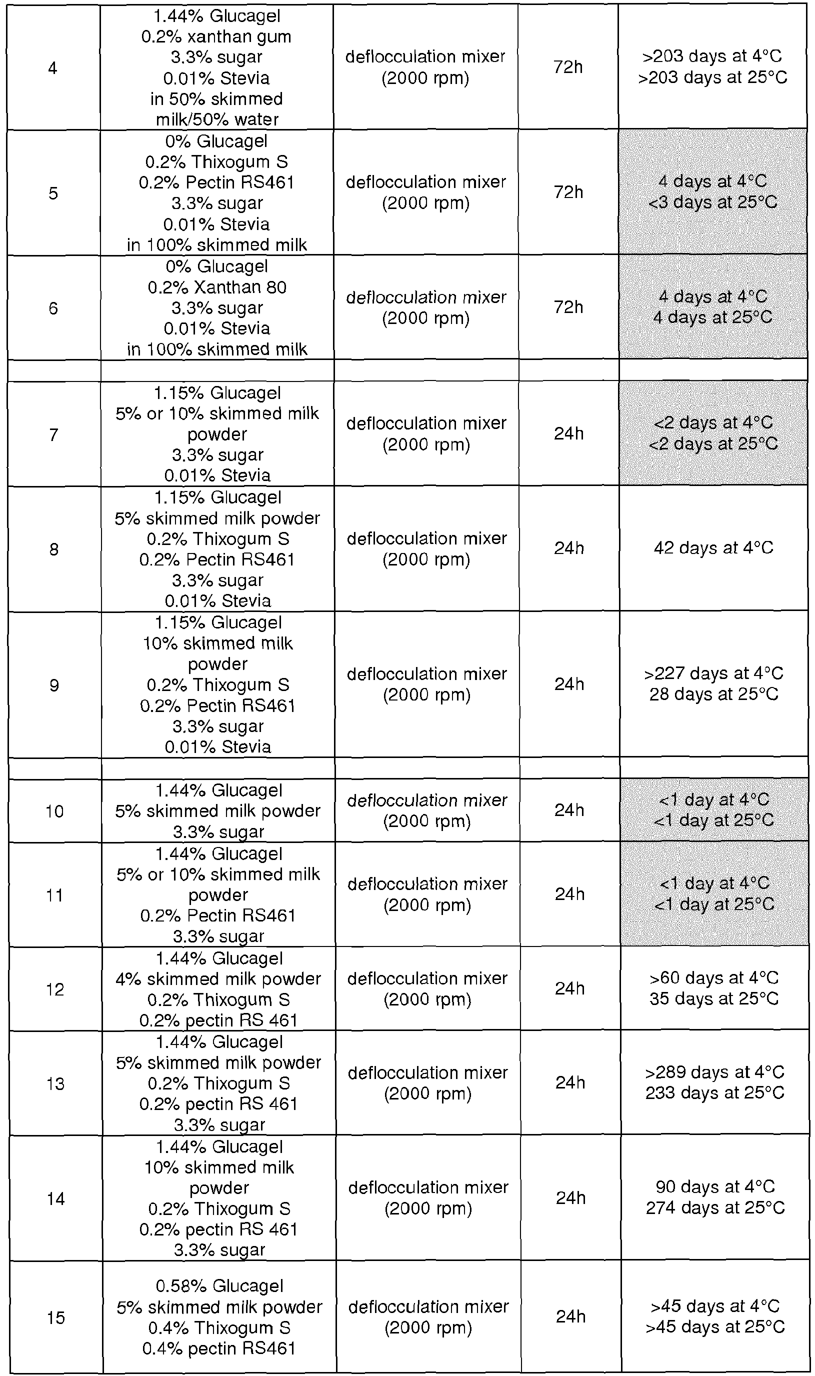

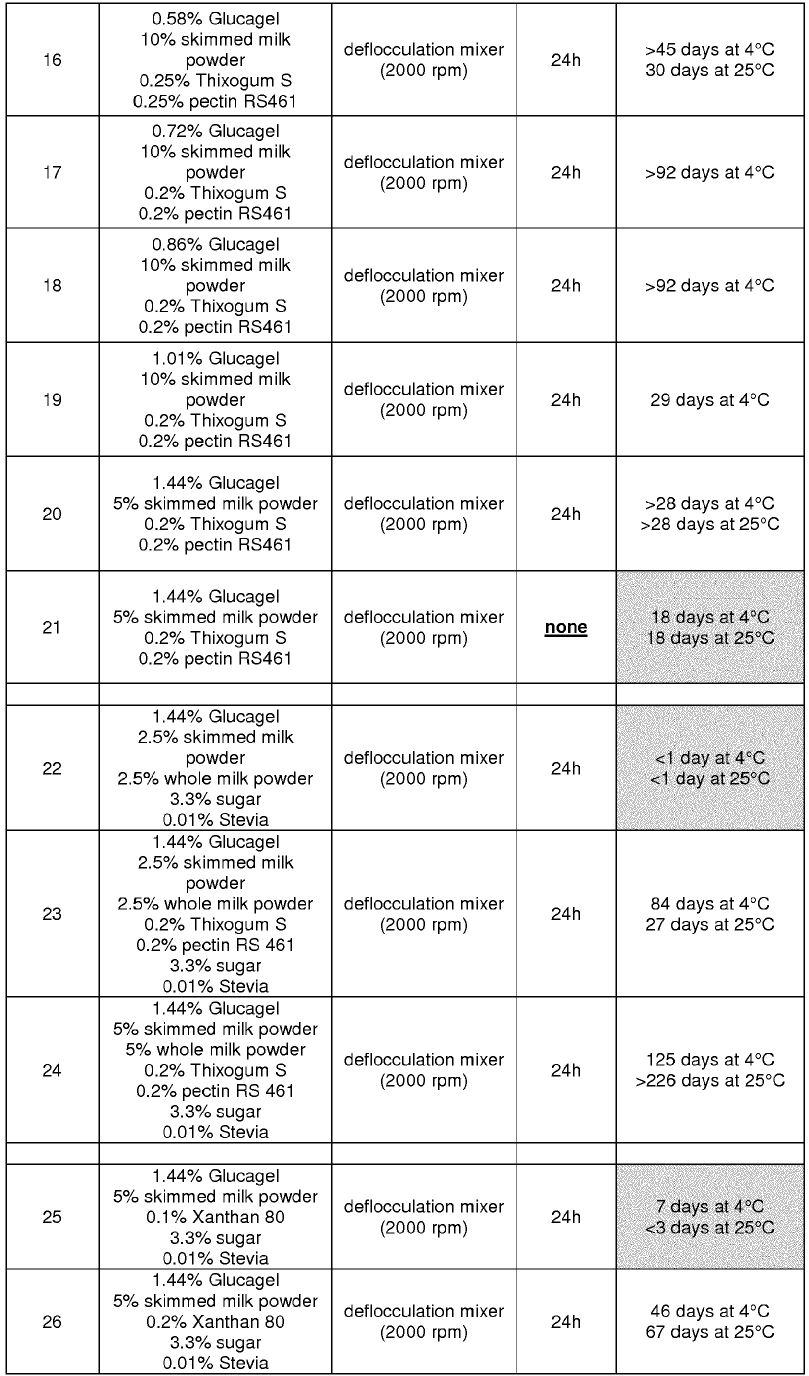

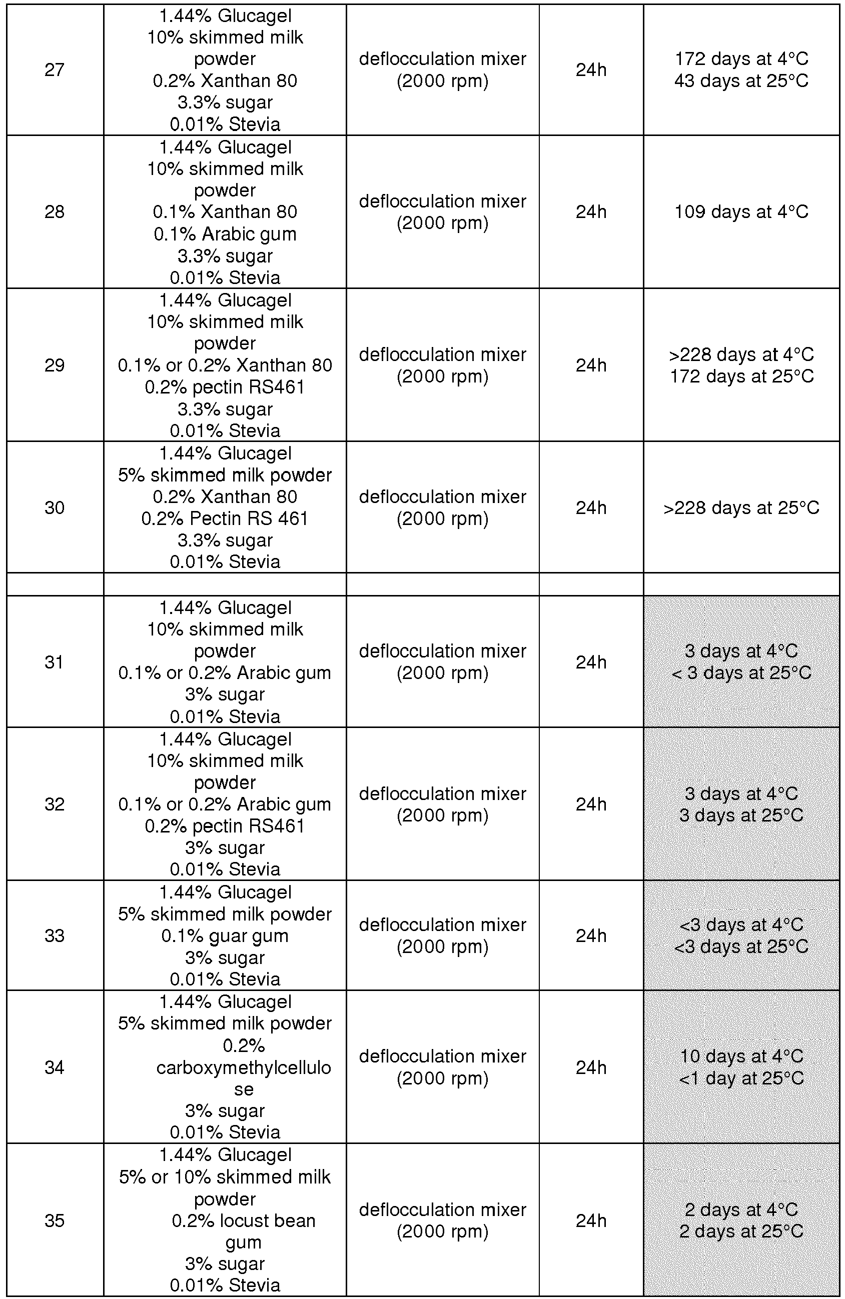

Comparative test drinks 1, 7, 10 and 22 show that a solution comprising β-glucan alone, without any stabilizing agent, is not stable more than 4 days, even if it has been prepared with a final shaking step.

Comparative test drinks 5 and 6 show that a solution comprising xantan gum and milk, without β-glucan, is not stable more than 4 days at 4°C and 25°C.

Comparative test drink 11 shows that a solution comprising β-glucan with only pectin as stabilizing agent is not stable more than 1 day at 4°C and 25°C, even if it has been prepared with a final shaking step.

Comparative test drink 25 shows that a solution comprising β-glucan with only 0.1 % xanthan gum, without another stabiliser, is not stable more than 7 days at 4°C and 3 days at 25°C, even if it has been prepared with a final shaking step.

Comparative test drinks 31 to 35 show that a solution comprising β-glucan and a stabilizing agent devoid of xanthan gum is not stable, even if it has been prepared with a final shaking step.

Comparative test drink 21 shows that a solution comprising β-glucan and 0.4% of stabilising agent (wherein at least 0.1 % is xanthan gum) is not stable more than 3 weeks if it has not been prepared with a final shaking step.

By contrast, test drinks 2-4, 8, 9, 12-20, 23, 24, and 26-30 according to the invention show that at least 0.2% of stabilising agent (wherein at least 0.1% is xanthan gum) extends the stability of the β-glucan enriched drink to at least a month at 4°C and 25°C, without affecting the drinkability of the drink.

### Example 2

### Comparative methods

Other methods, based on methods described in the prior art, were also tested on compositions according to the invention.
• The method described in WO 2008/101929 was tested.
According to this method, Glucagel™, skimmed milk powder, sugar, and Stevia (and optionally Thixogum S™ and pectin RS461) were mixed in order to obtain a mixture of powders. This mixture was then added to a predetermined amount of water preheated to 80°C to obtain a suspension, which was further heated to 95°C and mixed for 5 min with a deflocculation mixer at 2000 rpm. The mixture was let to cool under magnetic agitation at 500 rpm. The drink was conditioned in bottles, and the bottles were let to rest at 4°C or 25°C, without any further shaking step.
The results are presented in the **Table 2** below.

**Table 2: Stability period with a comparative method (WO 2008/101929)**

| Example | Ingredients | Stirring method | Bottle shaking | Stability period |
|---|---|---|---|---|
| 43 | 1.44% Glucagel | deflocculation mixer (2000 rpm) + magnetic stirrer (500 rpm) during cooling | none | |
| | 5% skimmed milk powder | | | |
| | 0.2% Thixogum S | | | 21 days at 4°C |
| | 0.2% pectin RS 461 | | | <3 days at 25°C |
| | 3.3% sugar | | | |
| | 0.01% Stevia | | | |
| 44 | 1.44% Glucagel | deflocculation mixer (2000 rpm) + magnetic stirrer (500 rpm) during cooling | none | |
| | 10% skimmed milk powder | | | <3 days at 4°C |
| | 3.3% sugar | | | <3 days at 25°C |
| | 0.01% Stevia | | | |

• The method described in the research paper of Srikanth Bangari (Effects of Oat Beta Glucan on the Stability and Textural Properties of Beta Glucan Fortified Milk Beverage, Graduate School of University of Wisconsin-Stout, May 2011) was also tested.

According to a first variant, milk was first prepared with 9.2% skimmed milk powder, then 0.03% of carrageenans were added at 63°C and the mixture was stirred for 2 min with a deflocculation mixer at 2000 rpm. Then, the solution was cooled, 6.67% of sugar and 0.9% (or 1.44%) of Glucagel™ were added, and the mixture was finally stirred for 2 min at 73°C with a deflocculation mixer at 2000 rpm. The drink was then conditioned in bottles, and the bottles were let to rest at 4°C or 25°C, without any further shaking step.
The results are presented in the **Table 3a** below.

**Table 3a: Stability period with a comparative method (Bangari)**

| Example | Ingredients | Stirring method | Bottle shaking | Stability period |
|---|---|---|---|---|
| 45 | 9.2% skimmed milk powder | deflocculation mixer (2000 rpm, 63°C) + deflocculation mixer (2000 rpm, 73°C) | none | |
| | 0.03% carrageenans | | | <1 day at 4°C |
| | 0.9% Glucagel | | | <1 day at 25°C |
| | 6.63 sugar | | | |
| 46 | 9.2% skimmed milk powder | deflocculation mixer (2000 rpm, 63°C) + deflocculation mixer (2000 rpm, 73°C) | none | |
| | 0.03% carrageenans | | | <1 day at 4°C |
| | 1.44% Glucagel | | | <1 day at 25°C |
| | 6.63 sugar | | | |

Alternatively, according to a second variant, milk was first prepared with 9.2% skimmed milk powder, then 0.03% of carrageenans, 6.67% of sugar and 0.9% (or 1.44%) of Glucagel™ were added. Then, the mixture was heated to 73°C and stirred for 2 min with a deflocculation mixer at 2000 rpm. The drink was then conditioned in bottles, and the bottles were let to rest at 4°C or 25°C, without any further shaking step.

The results are presented in the **Table 3b** below.

**Table 3b: Stability period with a comparative method (Bangari)**

| Example | Ingredients | Stirring method | Bottle shaking | Stability period |
|---|---|---|---|---|
| 47 | 9.2% skimmed milk powder | deflocculation mixer (2000 rpm, 73°C) | none | |
| | 0.03% carrageenans | | | <2 h at 4°C |
| | 0.9% Glucagel | | | <2 h at 25°C |
| | 6.63 sugar | | | |
| 48 | 9.2% skimmed milk powder | deflocculation mixer (2000 rpm, 73°C) | none | |
| | 0.03% carrageenans | | | 7 days at 4°C |
| | 1.44% Glucagel | | | <2 h at 25°C |
| | 6.63 sugar | | | |

### Example 3

The following drinks were prepared according to the method described above.

| Beverage n°1 | Beverage n°2 |
|---|---|
| 1.44% Glucagel | 1.44% Glucagel |
| 5% skimmed milk powder | 10% skimmed milk powder |
| 0.2% Thixogum S | 0.2% Thixogum S |
| 0.2% pectin RS 461 | 0.2% pectin RS 461 |
| 3.3% sugar | 3.3% sugar |
| 0.01 % Stevia | 0.01 % Stevia |

These drinks were kept at 4°C or 25°C and the viscosity was measured for 6 months. The viscosity was measured using a vibro-viscometer (AnD SV-10) according to the method described in the specification. For the drinks kept at 4°C, the viscosity was measured at 4°C and for the drinks kept at 25°C, the viscosity was measured at 25°C.

| mPa.s | **Beverage n°1** | | **Beverage n°2** | |
|---|---|---|---|---|
| | 4°C | 25°C | 4°C | 25°C |
| 0 days | 44.6 | 44.6 | 72.5 | 72.5 |
| 7 days | 66.7 | 47.6 | 88.0 | 64.3 |
| 14 days | 74.4 | 46.6 | 102.0 | 64.3 |
| 21 days | 74.3 | 41.7 | 96.6 | 57.9 |
| 28 days | 72.2 | 50.0 | 98.0 | 70.4 |
| 90 days | 65.8 | 45.7 | 88.7 | 52.8 |
| 180 days | 55.7 | 34.7 | 93.0 | 48.0 |

## Claims

1. A liquid milk drink, comprising:
- from 0.4% to 1.5% of at least one β-glucan polymer, and
- at least 0.15% of a stabilising agent, said stabilising agent comprising xanthan gum,
by weight relative to the total weight of said drink,
provided that said drink comprises at least 0.1% by weight of xanthan gum relative to the total weight of said drink.

2. The drink according to claim 1, comprising milk powder in an amount comprised from 4% to 10% by weight relative to the total weight of the drink.

3. The drink according to claim 1 or 2, wherein the stabilising agent is present in an amount comprised from 0.15% to 0.6%, preferably from 0.2% to 0.4%, by weight relative to the total weight of the drink.

4. The drink according to any one of claims 1 to 3, wherein the stabilising agent comprises xanthan gum and a hydrocolloid other than xanthan gum, said hydrocolloid being preferably selected from the group consisting of arabic gum, pectins, and mixtures thereof.

5. The drink according to any one of claims 1 to 4, comprising 0.1% of arabic gum, 0.1 % of xanthan gum and 0.2% of pectin, by weight relative to the total weight of the drink.

6. The drink according to any one of claims 1 to 3, wherein the stabilising agent consists in xanthan gum.

7. The drink according to any one of claims 1 to 6, having a viscosity comprised between 5 mPa.s and 150 mPa.s at 10°C, preferably between 10 mPa.s and 100 mPa.s at 10°C.

8. A method for preparing the liquid milk drink according to any one claims 1 to 7, comprising:
- a step of preparing a suspension comprising a β-glucan polymer, a stabilising agent comprising xanthan gum, and milk, the amount of β-glucan polymer in said suspension being comprised from 0.4% to 1.5% by weight relative to the total weight of said suspension,
- a step of mechanically stirring said suspension at a temperature comprised from 20°C to 90°C, until obtaining a homogeneous milk drink,
- a step wherein the milk drink is let to rest for a storage period at a temperature comprised from 4°C to 25°C, and
- a step of mechanically stirring the drink again after said storage period.

9. The method according to claim 8, wherein the suspension is obtained by adding the β-glucan polymer, the stabilising agent, and a milk powder, either simultaneously, separately or sequentially, to a predetermined amount of water.

10. The method according to claim 8, wherein the suspension is obtained by adding the β-glucan polymer and the stabilising agent, either simultaneously, separately or sequentially, to a predetermined amount of milk.

11. The method according to any one of claims 8 to 10, further comprising a thermal treatment of the drink.

12. A drink obtainable by the method according to any one of claims 8 to 10.

13. A beverage unit comprising an amount of drink according to any one of claims 1 to 7 such that said beverage unit comprises an amount of β-glucan polymer of at least 0.75 g, preferably at least 1 g, more preferably at least 3 g.

14. The drink as defined in any one of claims 1 to 7, for use for the prevention of a cardiovascular disease or metabolic syndrome in a subject.

15. The drink as defined in any one of claims 1 to 7, for use for decreasing and/or controlling blood cholesterol concentration in a subject and/or for decreasing and/or controlling glycemic index of a food or a meal ingested by a subject.
